# FASCICULE DE BREVET EUROPEEN

(11) **EP 3 189 313 B1**
(45) Date de publication et mention de la délivrance du brevet: **20.10.2021**
(21) Numéro de dépôt: 15767212.2
(22) Date de dépôt: 31.08.2015
(51) Int. Cl.: G01F 23/26

(54) **JAUGE DE CARBURANT**
KRAFTSTOFFMESSER
FUEL GAUGE

(30) Priorité: 01.09.2014 FR 1458169
(43) Date de publication de la demande: 12.07.2017
(73) Titulaire: SAFRAN AEROTECHNICS, 78370 Plaisir (FR)
(72) Inventeur: COLOMBANI, Eddy, F-78310 Maurepas (FR)
(74) Mandataire: Plasseraud IP
(86) Numéro de dépôt international: PCT/FR2015/052303
(87) Numéro de publication internationale: WO 2016/034800

(56) Documents cités:
- EP-A1- 2 720 006
- WO-A1-2011/064261
- FR-A1- 2 937 397

## Description

La présente invention concerne une jauge de carburant ainsi que son procédé de fabrication.

Il est connu de réaliser une jauge de carburant sous la forme de deux cylindres, respectivement interne et externe, chacun en matériau composite à base de fibres de carbone conductrices électriquement, et disposés fixement l'un à l'intérieur de l'autre sans contact électrique direct entre les cylindres. Alors la valeur de capacité pour le condensateur qui est formé par les cylindres est représentative d'un niveau du carburant existant entre les cylindres.

De telles jauges présentent un avantage en termes de poids qui est réduit, par rapport à des jauges dont la géométrie et le principe de fonctionnement sont identiques, mais pour lesquelles les deux cylindres sont chacun à base de feuille d'aluminium.

Par ailleurs, il est aussi connu de réaliser une jauge de carburant sous la forme de deux cylindres qui sont chacun en matériau composite à base de fibres de verre. Le cylindre interne comporte alors un premier revêtement de métallisation sur sa face externe, et le cylindre externe comporte un second revêtement de métallisation sur sa face interne. De telles jauges de carburant présentent aussi l'avantage de la réduction pondérale, mais les deux revêtements de métallisation sont longs et onéreux à réaliser.

Par contre, le fait que la surface externe du cylindre externe de la jauge soit isolante électriquement, présente un avantage en termes de sécurité. En effet, il n'y a alors aucun risque d'étincelle possiblement explosive au cas où cette surface externe entrerait accidentellement en contact avec un autre élément conducteur électriquement à l'intérieur du réservoir de carburant. Le risque lié à un tel contact accidentel qui se produirait avec la surface externe du cylindre interne de la jauge est moins important, car cette autre surface est moins exposée puisqu'elle est entourée par le cylindre externe.

Le document EP 2 720 006 décrit d'appliquer un revêtement sur une structure qui contient une unité de production de signaux d'émission sans fil, pour réduire des décharges électriques qui sont susceptibles d'être provoquées par ces signaux.

Un besoin existe encore à ce jour, pour une jauge de carburant qui présenterait simultanément les trois avantages qui viennent d'être cités : réduction pondérale, prix de fabrication qui est réduit, et sécurité par rapport à un contact accidentel avec un élément externe qui serait conducteur électriquement.

La présente invention a alors pour but de répondre à ce besoin.

Pour cela, un premier aspect de l'invention propose une jauge de carburant qui comprend encore deux cylindres, respectivement interne et externe, chacun en matériau composite à base de fibres conductrices électriquement et enrobées dans une matrice, le cylindre interne étant disposé fixement à l'intérieur du cylindre externe sans contact électrique direct entre les cylindres, de sorte qu'une valeur de capacité pour un condensateur qui est formé par les cylindres soit représentative d'un niveau du carburant existant entre les cylindres. Dans une telle jauge de carburant selon l'invention, le cylindre externe comporte un revêtement isolant électriquement qui est agencé sur la surface externe du cylindre externe, tournée à l'opposé du cylindre interne.

Une telle jauge de carburant possède à la fois un poids réduit, un coût réduit, et l'avantage de sécurité au cas où un élément conducteur électriquement viendrait en contact avec la surface externe du cylindre externe, accidentellement à l'intérieur d'un réservoir de carburant dans lequel la jauge a été installée.

Dans des réalisations préférées de l'invention, le revêtement isolant du cylindre externe, sur la surface externe de celui-ci, peut comprendre lui-même une couche d'un matériau composite à base de fibres isolantes électriquement et enrobées dans une matrice aussi isolante électriquement. Le revêtement isolant qui est ainsi constitué participe alors à la rigidité et la solidité du cylindre externe. En particulier, ce matériau composite du revêtement isolant du cylindre externe peut être à base de fibres de verre. Avantageusement, les fibres conductrices électriquement du matériau composite du cylindre externe et les fibres isolantes électriquement du matériau composite du revêtement isolant peuvent être enrobées sous forme de deux couches superposées de fibres dans une même matrice qui est commune à ces deux couches, pour former chaque matériau composite.

Préférablement, les fibres conductrices électriquement de l'un au moins des cylindres interne et externe peuvent comprendre des fibres de carbone.

De plus, la jauge de carburant peut aussi comprendre un bloc électrique qui est connecté électriquement aux deux cylindres, et adapté pour produire un signal représentatif de la valeur de capacité. Avantageusement, ce bloc électrique peut être connecté à chaque cylindre séparément par une broche conductrice électriquement dédiée, chaque broche étant enfoncée dans une borne électrique qui est fixée rigidement sur le cylindre correspondant en étant en contact électrique avec ce cylindre. Un tel assemblage est particulièrement fiable pendant toute la durée d'utilisation de la jauge de carburant, et permet des opérations de montage et de démontage qui sont faciles et rapides.

Dans des modes de réalisation avantageux, la borne électrique du cylindre externe peut comprendre une plaquette conductrice électriquement qui traverse ce cylindre externe, avec une première partie de la plaquette qui est appliquée contre une surface interne du cylindre externe, et une seconde partie de la plaquette qui est située sur le revêtement isolant électriquement pour recevoir la broche qui connecte le bloc électrique au cylindre externe.

Un second aspect de l'invention concerne un réservoir de carburant qui est équipé d'une jauge de carburant conforme au premier aspect. En particulier, un tel réservoir de carburant peut être du type réservoir pour aéronef.

Un troisième aspect de l'invention concerne un procédé de fabrication d'une jauge de carburant, dans lequel la jauge de carburant comprend deux cylindres, respectivement interne et externe, chacun en matériau composite à base de fibres conductrices électriquement et enrobées dans une matrice. Le procédé comprend les étapes suivantes qui sont exécutées pour chaque cylindre :
/1/ enrouler au moins une fibre conductrice électriquement, par exemple une fibre de carbone, sur un mandrin entrainé en rotation ;
/2/ traiter thermiquement un matériau de matrice qui est disposé en enrobage ou imprégnation de la fibre enroulée, pour former le matériau composite ; et
/3/ retirer le cylindre obtenu du mandrin.

Puis le cylindre interne est disposé fixement à l'intérieur du cylindre externe sans contact électrique direct entre les cylindres, de sorte qu'une valeur de capacité pour un condensateur qui est formé par les cylindres soit représentative d'un niveau du carburant existant entre les cylindres.

Selon l'invention, le procédé comprend en outre de former un revêtement isolant électriquement sur une surface externe du cylindre externe, cette surface externe du cylindre externe étant tournée à l'opposé du cylindre interne dans la jauge de carburant.

Préférablement, la formation du revêtement isolant électriquement sur la surface externe du cylindre externe peut comprendre l'étape supplémentaire suivante exécutée pour le cylindre externe, après l'étape /1/ :
/4/ enrouler au moins une fibre de matériau isolant électriquement sur le mandrin entrainé en rotation, par-dessus la fibre conductrice électriquement déjà enroulée.

De façon avantageuse, cette étape /4/ peut être exécutée entre les étapes /1/ et /2/, et l'étape /2/ est exécutée ensuite de façon à traiter thermiquement le matériau de matrice qui est disposé en enrobage ou en imprégnation à la fois sur la fibre conductrice électriquement enroulée et sur la fibre enroulée de matériau isolant électriquement, le matériau de matrice étant isolant électriquement.

Un procédé de fabrication qui est conforme au troisième aspect de l'invention fournit une jauge de carburant qui est elle-même conforme au premier aspect de l'invention.

D'autres particularités et avantages de la présente invention apparaîtront dans la description ci-après d'exemples de réalisation non limitatifs, en référence aux dessins annexés suivants :

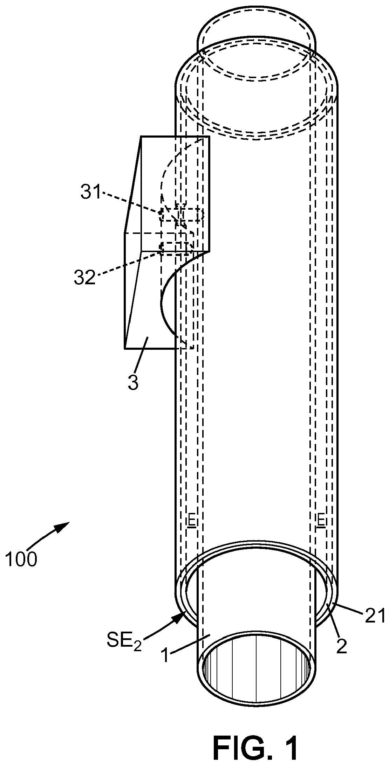

- la figure 1 est une vue en perspective d'une jauge de carburant conforme à l'invention ;
- la figure 2 illustre un réservoir de carburant qui est équipé de la jauge de la figure 1 ; et
- la figure 3 est une vue grossie et tronquée d'une partie de la figure 1, sous une direction de perspective différente.

Pour raison de clarté, les dimensions des éléments qui sont représentés dans ces figures ne correspondent ni à des dimensions réelles ni à des rapports de dimensions réels.

Les références qui sont indiquées dans les figures ont les significations suivantes :
100 jauge de carburant désignée globalement
1 cylindre interne
2 cylindre externe
E espace intermédiaire entre les cylindres 1 et 2
SE₂ surface externe du cylindre externe 2
SI₂ surface interne du cylindre externe 2, opposée à la surface externe SE₂
21 revêtement isolant qui est disposé sur la surface externe SE₂
3 bloc électrique
31 broche issue du bloc électrique 3 et réalisant un contact avec le cylindre interne 1
32 broche issue du bloc électrique 3 et réalisant un contact avec le cylindre externe 2
33 borne de contact sur le cylindre 1
33a et 33b rivets de fixation de la borne 33 sur le cylindre 1
34 borne de contact sur le cylindre 2
34a et 34b rivets de fixation de la borne 34 sur le cylindre 2
200 réservoir de carburant
201 paroi supérieure du réservoir 200
202 paroi inférieure du réservoir 200
203 volume interne du réservoir 200, dans lequel est installée rigidement la jauge de carburant 100
S surface libre du carburant liquide à l'intérieur du réservoir 200

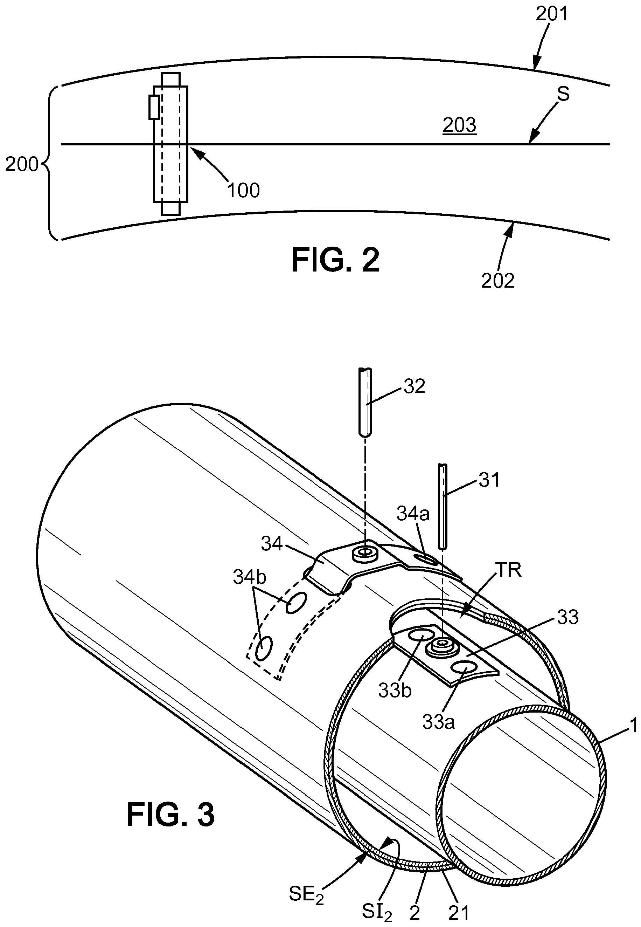

Les cylindres 1 et 2 peuvent être en fibre de carbone imprégnées de résine, par exemple de résine époxy. Le matériau composite qui est ainsi constitué est conducteur électriquement, du fait des fibres de carbone qui sont elles-mêmes conductrices et forment une trame quasi-continue à l'intérieur de chaque cylindre. Les cylindres 1 et 2 constituent ainsi chacun une armature d'un condensateur électrique, dont la valeur de capacité dépend du milieu diélectrique qui est présent entre eux. Pour cela, les deux cylindres 1 et 2 n'ont pas de contact électrique direct entre eux, mais sont maintenus l'un à l'intérieur de l'autre par des supports appropriés (non représentés). Par exemple, les cylindres 1 et 2 peuvent être coaxiaux. Lorsque la jauge 100 ainsi constituée est placée avec une orientation déterminée à l'intérieur du réservoir de carburant 200 (voir figure 2), par exemple un réservoir de carburant pour avion, la valeur de la capacité varie en fonction du niveau de remplissage par le carburant, de l'espace intermédiaire E qui sépare les cylindres 1 et 2. Autrement dit, la valeur de capacité varie en fonction de la hauteur de la surface libre S entre les parois 201 et 202 du réservoir. Un tel fonctionnement capacitif de la jauge 100 est connu, si bien qu'il n'est pas nécessaire de le répéter ici.

La surface externe SE₂ du cylindre 2 est donc tournée à l'opposé du cylindre 1. Le cylindre 2 est recouvert, sur cette surface externe SE₂, par le revêtement isolant électriquement 21. Le revêtement 21 peut avoir des compositions et des modes de réalisation très variés. Par exemple, le revêtement 21 peut être un vernis isolant qui est appliqué par enduction sur le cylindre 2 puis séché.

Selon un mode de réalisation préféré du revêtement 21, celui-ci est aussi en matériau composite, mais avec une composition qui le rend isolant électriquement. Par exemple, le revêtement 21 peut être en fibre de verre imprégnée de résine époxy. La réalisation du revêtement 21 peut alors être économique, avec des étapes de fabrication qui sont partagées avec le cylindre externe 2.

Par exemple, une fibre de carbone est d'abord enroulée sur un mandrin dont le diamètre correspond au diamètre interne du cylindre 2, de façon à former une première couche. Puis, une fibre de verre est enroulée sur le mandrin à la suite de la fibre de carbone, par-dessus celle-ci, de façon à former une seconde couche. Les deux couches de fibres peuvent ensuite être imprégnées avec une solution contenant des monomères de résine époxy, puis sont séchées. La résine époxy est ainsi solidifiée définitivement, et maintient rigidement toutes les spires de fibres, de carbone et de verre, conformément à leurs dispositions initiales. Le mandrin peut alors être extrait axialement. Les deux couches qui constituent respectivement les matériaux composites du cylindre 2 et de son revêtement 21 peuvent avoir chacune une épaisseur de un ou quelques dixièmes de millimètre, par exemple.

Dans un procédé alternatif de fabrication de la jauge, les fibres utilisées, conductrices et/ou isolantes électriquement, peuvent être initialement pré-imprégnées ou enrobées avec les monomères de résine époxy. Dans ce cas, les deux couches de fibres, de carbone et de verre, peuvent être chauffées directement après avoir été enroulées l'une après l'autre sur le mandrin. Les fibres pré-imprégnées ou enrobées sont ainsi transformées en matériaux composites rigides qui constituent le cylindre externe et son revêtement isolant électriquement.

Dans la jauge de carburant 100, le cylindre 2 remplit la fonction d'armature électrique externe du condensateur, et le revêtement 21 constitue une gaine externe qui est isolante électriquement pour cette armature externe.

Le cylindre 1 peut être réalisé d'une façon qui est similaire à celle du cylindre 2, mais sans nécessairement utiliser de fibre de verre à la suite de la fibre de carbone. Le cylindre 1 remplit la fonction d'armature électrique interne de la jauge de carburant 100.

Le bloc électrique 3 contient un circuit électrique qui est connecté électriquement aux deux cylindres 1 et 2. Par exemple, le circuit électrique comprend un circuit RLC-série, dont C est la capacité du condensateur qui est constitué par les cylindres 1 et 2, L et R respectivement une inductance et une résistance fixes. Les caractéristiques électriques d'un tel circuit sont sensibles aux variations de la valeur de la capacité C, et donc aux variations du niveau de remplissage du réservoir de carburant 200. D'autres types de circuit de détection peuvent être utilisés alternativement. Dans tous les cas, au moins deux connexions électriques relient le circuit du bloc électrique 3 séparément au cylindre 1 et au cylindre 2. D'une façon préférée, ces connexions peuvent être réalisées sous la forme de broches à enfoncement, faciles à assembler et qui sont particulièrement fiables tout au long de la durée d'utilisation de la jauge 100.

La figure 3 montre un exemple possible de connexion du bloc électrique 3 aux cylindres 1 et 2.

La borne 33 peut avoir la forme d'une plaquette métallique qui est munie d'un trou calibré pour enfoncer la broche 31. La borne 33 peut être fixée sur la surface externe du cylindre interne 1 par les rivets 33a et 33b, si le cylindre 1 n'est pas recouvert d'une couche isolante électriquement sur cette surface. Un trou cylindrique TR peut être ménagé à travers le cylindre externe 2 et le revêtement 21, au droit de la borne 33, pour que la broche 31 puisse être introduite à travers le trou TR et enfoncée dans la borne 33 sans contact avec le cylindre 2. Ainsi, la broche 31 produit une connexion électrique entre le bloc électrique 3 et le cylindre interne 1.

La borne 34 peut aussi avoir la forme d'une plaquette métallique qui est munie d'un trou calibré, mais pour y enfoncer la broche 32. La borne 34 peut être fixée sur le cylindre externe 2 par les rivets 34a et 34b, mais une partie de la plaquette métallique est agencée à l'intérieur du cylindre 2, contre sa surface interne SI₂, afin de réaliser le contact électrique avec le cylindre 2 malgré la présence du revêtement isolant 21 sur la surface externe SE₂. Ainsi, la broche 32 produit une connexion électrique entre le bloc électrique 3 et le cylindre externe 2.

D'autres modes de fixation que des rivets peuvent être utilisés alternativement pour fixer les bornes 33 et 34 sur les cylindres 1 et 2.

Les broches 31 et 32 peuvent être rigidement solidaires du bloc électrique 3, afin que la connexion du bloc 3 aux cylindres 1 et 2 puisse être opérée simplement en pressant sur le bloc 3, pour enfoncer simultanément les deux broches 31 et 32 dans les bornes 33 et 34. Eventuellement, les broches 31 et 32 peuvent avoir des diamètres différents, pour imposer un sens de connexion déterminé.

Evidemment, d'autres méthodes pratiques peuvent être mises en œuvre alternativement, pour connecter électriquement le bloc électrique 3 aux cylindres 1 et 2, à travers le revêtement isolant 21 qui est introduit par l'invention.

Enfin, des fibres conductrices électriquement autres que des fibres de carbone peuvent être utilisées alternativement pour former les cylindres interne et/ou externe. De même, la résine époxy qui a été prise en exemple peut être remplacée par tout autre matériau de matrice, qui est isolant électriquement lorsqu'il participe à la composition du revêtement du cylindre externe.

## Revendications

1. Jauge de carburant (100) comprenant deux cylindres, respectivement interne (1) et externe (2), chacun en matériau composite à base de fibres conductrices électriquement et enrobées dans une matrice, le cylindre interne étant disposé fixement à l'intérieur du cylindre externe sans contact électrique direct entre les cylindres, de sorte qu'une valeur de capacité pour un condensateur qui est formé par les cylindres soit représentative d'un niveau du carburant existant entre les dits cylindres,
**caractérisée en ce que** le cylindre externe (2) comporte un revêtement isolant électriquement (21) qui est agencé sur une surface externe (SE₂) dudit cylindre externe, tournée à l'opposé du cylindre interne (1).

2. Jauge de carburant selon la revendication 1, dans laquelle le revêtement isolant (21) comprend lui-même une couche d'un matériau composite à base de fibres isolantes électriquement et enrobées dans une matrice aussi isolante électriquement.

3. Jauge de carburant selon la revendication 2, dans laquelle le matériau composite du revêtement isolant (21) du cylindre externe (2), est à base de fibres de verre.

4. Jauge de carburant selon la revendication 2 ou 3, dans laquelle les fibres conductrices électriquement du matériau composite du cylindre externe (2) et les fibres isolantes électriquement du matériau composite du revêtement isolant (21) sont enrobées sous forme de deux couches superposées de fibres dans une même matrice commune aux dites deux couches, pour former chaque matériau composite.

5. Jauge de carburant selon l'une quelconque des revendications précédentes, dans laquelle les fibres conductrices électriquement de l'un au moins des cylindres interne (1) et externe (2) comprennent des fibres de carbone.

6. Jauge de carburant selon l'une quelconque des revendications précédentes, comprenant en outre un bloc électrique (3) connecté électriquement aux deux cylindres (1, 2), et adapté pour produire un signal représentatif de la valeur de capacité,
et dans laquelle le bloc électrique (3) est connecté à chaque cylindre (1, 2) séparément par une broche conductrice électriquement (31, 32), chaque broche étant enfoncée dans une borne électrique (33, 34) qui est fixée rigidement sur le cylindre correspondant en étant en contact électrique avec ledit cylindre.

7. Jauge de carburant selon la revendication 6, dans laquelle la borne électrique (34) du cylindre externe (2) comprend une plaquette conductrice électriquement qui traverse ledit cylindre externe, avec une première partie de la plaquette qui est appliquée contre une surface interne (SI₂) du cylindre externe, et une seconde partie de la plaquette qui est située sur le revêtement isolant électriquement (21) pour recevoir la broche (32) qui connecte le bloc électrique (3) au cylindre externe.

8. Réservoir de carburant (200), équipé d'une jauge de carburant (100) conforme à l'une quelconque des revendications 1 à 7.

9. Réservoir de carburant selon la revendication 8, du type réservoir pour aéronef.

10. Procédé de fabrication d'une jauge de carburant (100), dans lequel la jauge de carburant comprend deux cylindres, respectivement interne (1) et externe (2), chacun en matériau composite à base de fibres conductrices électriquement et enrobées dans une matrice,
le procédé comprenant les étapes suivantes exécutées pour chaque cylindre :
/1/ enrouler au moins une fibre conductrice électriquement sur un mandrin entrainé en rotation ;
/2/ traiter thermiquement un matériau de matrice disposé en enrobage ou imprégnation de la fibre enroulée, pour former le matériau composite ;
/3/ retirer le cylindre obtenu du mandrin ; et
disposer le cylindre interne (1) fixement à l'intérieur du cylindre externe (2) sans contact électrique direct entre les cylindres, de sorte qu'une valeur de capacité pour un condensateur qui est formé par les dits cylindres soit représentative d'un niveau du carburant existant entre les dits cylindres,
**caractérisé en ce que** le procédé de fabrication comprend en outre de former un revêtement isolant électriquement (21) sur une surface externe (SE₂) du cylindre externe (2), ladite surface externe du cylindre externe étant tournée à l'opposé du cylindre interne (1) dans la jauge de carburant (100).

11. Procédé de fabrication selon revendication 10, dans lequel la formation du revêtement isolant électriquement (21) sur la surface externe (SE₂) du cylindre externe (2) comprend l'étape supplémentaire suivante exécutée pour ledit cylindre externe, après l'étape /1/ :
/4/ enrouler au moins une fibre de matériau isolant électriquement sur le mandrin entrainé en rotation, par-dessus la fibre conductrice électriquement déjà enroulée.

12. Procédé de fabrication selon la revendication 11, suivant lequel l'étape /4/ est exécutée entre les étapes /1/ et /2/ pour le cylindre externe, et l'étape /2/ est exécutée de façon à traiter thermiquement le matériau de matrice qui est disposé en enrobage ou en imprégnation à la fois sur la fibre conductrice électriquement enroulée et sur la fibre enroulée de matériau isolant électriquement, ledit matériau de matrice étant isolant électriquement.

## Patentansprüche

1. Kraftstoff-Messeinrichtung (100), umfassend zwei Zylinder, jeweils ein innerer (1) und ein äußerer (2), jeder aus einem Verbundmaterial auf Basis von Fasern, die elektrisch leitfähig und in einer Matrix eingehüllt sind, wobei der innere Zylinder fest im Innern des äußeren Zylinders angeordnet ist, ohne einen direkten elektrischen Kontakt zwischen den Zylindern, so dass ein Kapazitätswert für einen Kondensator, der durch die Zylinder gebildet wird, repräsentativ für einen Pegel des Kraftstoffs ist, der zwischen den Zylindern vorliegt,
**dadurch gekennzeichnet, dass** der äußere Zylinder (2) eine elektrisch isolierende Ummantelung (21) aufweist, welche an einer Außenfläche (SE₂) des äußeren Zylinders angeordnet ist, die dem inneren Zylinder (1) abgewandt ist.

2. Kraftstoff-Messeinrichtung nach Anspruch 1, wobei die isolierende Ummantelung (21) selbst eine Schicht aus einem Verbundmaterial auf Basis von Fasern umfasst, die elektrisch isolierend und in einer ebenfalls elektrisch isolierenden Matrix eingehüllt sind.

3. Kraftstoff-Messeinrichtung nach Anspruch 2, wobei das Verbundmaterial der isolierenden Ummantelung (21) des äußeren Zylinders (2) auf Glasfasern basiert.

4. Kraftstoff-Messeinrichtung nach Anspruch 2 oder 3, wobei die elektrisch leitfähigen Fasern des Verbundmaterials des äußeren Zylinders (2) und die elektrisch isolierenden Fasern des Verbundmaterials der isolierenden Ummantelung (21) in Form von zwei übereinanderliegenden Lagen von Fasern in einer gleichen Matrix eingehüllt sind, die den beiden Lagen gemeinsam ist, um jedes Verbundmaterial zu bilden.

5. Kraftstoff-Messeinrichtung nach einem der vorhergehenden Ansprüche, wobei die elektrisch leitenden Fasern des inneren (1) und/oder äußeren (2) Zylinders Kohlefasern umfassen.

6. Kraftstoff-Messeinrichtung nach einem der vorhergehenden Ansprüche, weiterhin umfassend einen elektrischen Block (3), der elektrisch mit den beiden Zylindern (1, 2) verbunden und dazu angepasst ist, ein Signal zu erzeugen, das repräsentativ für den Kapazitätswert ist,
und wobei der elektrische Block (3) mit jedem Zylinder (1, 2) separat durch einen elektrisch leitenden Stift (31, 32) verbunden ist, wobei jeder Stift in einen elektrischen Anschluss (33, 34) gepresst ist, der starr an dem entsprechenden Zylinder befestigt ist, wobei er mit dem Zylinder in elektrischem Kontakt steht.

7. Kraftstoff-Messeinrichtung nach Anspruch 6, wobei der elektrische Anschluss (34) des äußeren Zylinders (2) eine elektrisch leitfähige Platte umfasst, die durch den äußeren Zylinder hindurch verläuft, mit einem ersten Abschnitt der Platte, der an einer Innenfläche (SI₂) des äußeren Zylinders anliegt, und mit einem zweiten Abschnitt der Platte, der sich auf der elektrisch isolierenden Ummantelung (21) befindet, um den Stift (32) aufzunehmen, der den elektrischen Block (3) mit dem äußeren Zylinder verbindet.

8. Kraftstoff-Tank (200), ausgestattet mit einer Kraftstoff-Messeinrichtung (100) nach einem der Ansprüche 1 bis 7.

9. Kraftstoff-Tank nach Anspruch 8, vom Typ Flugzeugtank.

10. Herstellungsverfahren für eine Kraftstoff-Messeinrichtung (100), wobei die Kraftstoff-Messeinrichtung zwei Zylinder umfasst, einen inneren (1) und einen äußeren (2), jeweils aus einem Verbundmaterial auf Basis von Fasern, die elektrisch leitfähig und in einer Matrix eingehüllt sind, wobei das Verfahren die folgenden Schritte umfasst, die für jeden Zylinder durchgeführt werden:
/1/ Aufwickeln von mindestens einer elektrisch leitfähigen Faser auf einen zur Drehung angetriebenen Dorn;
/2/ Thermisches Behandeln eines Matrix-Materials, das als Umhüllung oder Imprägnierung der aufgewickelten Faser angeordnet ist, um das Verbundmaterial zu bilden;
/3/ Entfernen des erhaltenen Zylinders vom Dorn; und
Anordnen des inneren Zylinders (1) fest im Inneren des äußeren Zylinders (2) ohne direkten elektrischen Kontakt zwischen den Zylindern, so dass ein Kapazitätswert für einen Kondensator, der durch die Zylinder gebildet wird, repräsentativ für einen Pegel des zwischen den Zylindern vorliegenden Kraftstoffs ist,
**dadurch gekennzeichnet, dass** das Herstellungsverfahren ferner umfasst, eine elektrisch isolierende Ummantelung (21) auf einer Außenfläche (SE₂) des äußeren Zylinders (2) zu bilden, wobei die Außenfläche des äußeren Zylinders dem inneren Zylinder (1) in der Kraftstoff-Messeinrichtung (100) abgewandt ist.

11. Herstellungsverfahren nach Anspruch 10, wobei das Bilden der elektrisch isolierenden Ummantelung (21) auf der Außenfläche (SE₂) des äußeren Zylinders (2) den folgenden zusätzlichen Schritt umfasst, der für den äußeren Zylinder nach Schritt /1/ durchgeführt wird:
/4/ Aufwickeln mindestens einer Faser aus elektrisch isolierendem Material auf den zur Drehung angetriebenen Dorn über die bereits aufgewickelte elektrisch leitfähige Faser.

12. Herstellungsverfahren nach Anspruch 11, wobei der Schritt /4/ zwischen den Schritten /1/ und /2/ für den äußeren Zylinder durchgeführt wird, und der Schritt /2/ so durchgeführt wird, dass das Matrix-Material thermisch behandelt wird, das als Umhüllung oder Imprägnierung sowohl an der elektrisch leitfähigen aufgewickelten Faser als auch an der aufgewickelten Faser aus elektrisch isolierendem Material angeordnet ist, wobei das Matrix-Material elektrisch isolierend ist.

## Claims

1. A fuel gauge (100) comprising two cylinders, internal (1) and external (2) respectively, each made of composite material based on electrically conducting fibers which are embedded in a matrix, the internal cylinder being fixedly placed inside the external cylinder without direct electrical contact between the cylinders, so that a capacity value for a capacitor that is formed by the cylinders is representative of a fuel level existing between said cylinders,
**characterized in that** the external cylinder (2) includes an electrically insulating coating (21) arranged on an external surface (SE₂) of said external cylinder, facing against the internal cylinder (1).

2. The fuel gauge according to Claim 1, wherein the insulating coating (21) comprises itself a layer of a composite material based on electrically insulating fibers embedded in a matrix which is also electrically insulating.

3. The fuel gauge according to Claim 2, wherein the composite material of the insulating coating (21) of the external cylinder (2), is based on glass fibers.

4. The fuel gauge according to Claim 2 or 3, wherein the electrically conducting fibers of the composite material of the external cylinder (2) and the electrically insulating fibers of the composite material of the insulating coating (21) are embedded in a form of two superimposed layers of fibers in one same matrix that is common to said two layers, for forming each composite material.

5. The fuel gauge according to any one of the preceding claims, wherein the electrically conducting fibers of at least one of the internal (1) and external (2) cylinders comprise carbon fibers.

6. The fuel gauge according to any one of the preceding claims, further comprising an electrical block (3) electrically connected to both cylinders (1, 2), and adapted to produce a signal representative of the capacity value,
and wherein the electrical block (3) is connected to each cylinder (1, 2) separately by an electrically conducting pin (31, 32), each pin being inserted into an electrical terminal (33, 34) which is rigidly fixed onto the corresponding cylinder and in electrical contact with said cylinder.

7. The fuel gauge according to Claim 6, wherein the electrical terminal (34) of the external cylinder (2) comprises an electrically conducting plate which crosses said external cylinder, with a first part of the plate which is applied against an internal surface (SI₂) of the external cylinder, and a second part of plate which is located on the electrically insulating coating (21) to receive the pin (32) which connects the electrical block (3) to the external cylinder.

8. A fuel tank (200), equipped with a fuel gauge (100) in compliance with any one of Claims 1 to 7.

9. The fuel tank according to Claim 8, of aircraft tank type.

10. A method of manufacturing a fuel gauge (100), wherein the fuel gauge comprises two cylinders, internal (1) and external (2) respectively, each made of composite material based on electrically conducting fibers embedded in a matrix,
the method comprising the following steps executed for each cylinder:
/1/ winding at least one electrically conducting fiber on a rotatably driven mandrel;
/2/ thermally processing a matrix material arranged for embedding or impregnating the wound fiber, for forming the composite material;
/3/ removing the obtained cylinder from the mandrel; and
placing the internal cylinder (1) fixedly inside the external cylinder (2) without direct electrical contact between the cylinders, so that a capacity value for a capacitor formed by said cylinders is representative of a fuel level between said cylinders,
**characterized in that** the method of manufacturing further comprises forming an electrically insulating coating (21) on an external surface (SI₂) of the external cylinder (2), said external surface of the external cylinder facing against the internal cylinder (1) in the fuel gauge (100).

11. The method of manufacturing according to Claim 10, wherein forming the electrically insulating coating (21) on the external surface (SI₂) of the external cylinder (2), comprises the following additional step executed for said external cylinder, after step /1/:
/4/ winding at least one fiber of electrically insulating material onto the rotatably driven mandrel, above the electrically conducting fiber which is already wound.

12. The method of manufacturing according to Claim 11, wherein step /4/ is executed between steps /1/ and /2/ for the external cylinder, and step /2/ is executed so as to thermally process the matrix material which is arranged for embedding or impregnating both the electrically conducting fiber wound and the wound fiber of electrically insulating material, said matrix material being electrically insulating.
